# EUROPEAN PATENT SPECIFICATION

(11) **EP 1 436 450 B1**
(45) Date of publication and mention of the grant of the patent: **04.04.2007**
(21) Application number: 02767705.3
(22) Date of filing: 10.10.2002
(51) Int. Cl.: D02G 3/38, D02G 3/44, D03D 15/10

(54) **FABRIC**
GEWEBE
TISSU

(30) Priority: 10.10.2001 GB 0124267
(43) Date of publication of application: 14.07.2004
(73) Proprietor: JOHN HEATHCOAT & COMPANY LIMITED, Westexe Tiverton Devon EX16 5LL (GB)
(72) Inventor: ROOCROFT, Brian Thomas, Devon EX16 4JL (GB)
(74) Representative: Knowles, James Atherton
(86) International application number: PCT/GB2002/004597
(87) International publication number: WO 2003/031700

(56) References cited:
- EP-A- 1 035 353
- GB-A- 837 749
- US-A- 4 470 251
- US-A- 4 554 121
- US-A- 5 069 957
- US-A- 5 183 703
- US-A- 5 296 292
- US-A- 5 527 597

## Description

This invention relates to a fabric particularly, although not exclusively, one which can be incorporated in a timing (synchronous) belt, for use in automobile engines, or other industrial uses.

Existing timing or synchronous belts, when used in engines or the like, are provided with teeth which distort, thereby causing movement of the belt against pulleys or other parts. This leads to wear on the belt and is a mode of failure. Additionally, the distortion of the teeth leads to elastic hysteresis, and in turn leads to heat build up. Nylon has typically been chosen as a fabric forming the surface of the belt which contacts the pulleys. However, such belts are prone to failure and motor manufacturers are increasingly demanding belts which require no replacement throughout the lifetime of the vehicle. Additionally, higher performance surface fabrics are, in turn, required.

GB-A-2308827 discloses a method and apparatus for forming PTFE material, particularly in dental floss.

EP-A-1035353 discloses a power transmission belt which includes PTFE fibres dispersed throughout a composition forming an outer surface of the belt.

Various types of fabric which comprise a friction reducing substance are disclosed in, for example GB 996967, GB 837749, FR-A-2502197 and SU-A-907094.

US 4502364 discloses yarns having a glass and/or acrylic core and an outer later of polyphenylene sulphide fibres.

EP-A-1035353 discloses a power transmission belt in which PTFE in the form of fibres is dispersed throughout the composition.

According to a first aspect of the present invention, there is provided a fabric comprising:
(a) a first yam which comprises a friction reducing substance; and
(b) a second yarn,
wherein more of the first yarn is present on one surface of the fabric than on the other surface of the fabric, and wherein the first yarn comprises a core thread surrounded by a thread comprising the friction reducing substance.

The friction reducing substance preferably has a coefficient of friction of less than 0.5, in accordance with A.S.T.M. D. 1984 method. In a preferred embodiment it is PTFE.

Preferably the second yarn does not comprise a friction reducing substance.

Thus, the surface having more of the first yarn has the ability, in some embodiments, to lower the co-efficient of friction when used on the surface of a toothed belt, thus lowering the heat generated by a belt comprising the fabric as it engages with the pulleys in a drive system. This, in turn, enhances the durability of the fabric and the belt of which it may form part.

Whilst the first yarn may be present in the weft and/or warp direction in the fabric, in one embodiment it is present in the weft direction.

In one embodiment, the core thread is surrounded by an inner thread, which is itself surrounded by an outer thread. The outer thread preferably comprises a friction reducing substance. Whilst the inner yam is typically formed from a friction reducing substance, it can be made from other substances, for example nylon, as it does not form part of the fabric surface. Preferably, the inner thread is wound around the core in the opposite direction to the outer thread.

In a preferred embodiment, the core thread is elastic, for example being formed of polyurethane, rubber or the like. During the winding process (in which the one or more surrounding threads are wound around the core thread), the core is stretched under tension by, typically, about 110%. After winding, the core thread is relaxed and consequently the threads that have been wound around the core are more condensed. After the fabric has been finished it may be stretched and released by a factor of at least about 90% during subsequent processes, for example to enable the fabric to be stretched over the contours of a synchronous belt or the like.

The second yarn preferably comprises a thermoplastic material, for example Nylon 66. It is preferably capable of stretching by at least 80% before failure and by at least 65% under a 100N load. This is achieved by passing the yarn though a false twist-texturing machine. In one embodiment, false twist texturing comprises the following process: A continuous filament thermoplastic yarn (Nylon 66 in this case) is continuously passed through a machine. The yarn is highly twisted, heat set in its twisted state and then untwisted. As the yarn is thermoplastic, it has a heat memory and given the correct conditions in subsequent processes, the yarn will want to revert back to its heat set condition. It is also preferable for this yarn to retain at least 80% of its initial tensile strength after exposure to heat at 140°C for 14 days.

In a preferred embodiment, the strength of the first yarn is at least 30 centi Newtons/tex (3.0g/decitex).

Whilst the yarns can be any appropriate profile, in a preferred embodiment, the first yarn of is of a form such that it can exhibit its best lubrication effect, for example by comprising a flattened outer surface on an otherwise substantially circular or oval cross-section shaped substantially cylindrical yarn.

According to a second aspect of the present invention, there is provided a belt comprising the fabric, wherein the surface of the fabric comprising more of the first yam is an outer working surface of the belt.

The belt preferably further comprises a substrate, wherein the other surface of the fabric is adhered or otherwise attached to the substrate. The outer working surface preferably comprises protrusions, for example in the form of teeth, which may contact moving parts of an engine or the like. The substrate may comprise a filler material. The belt may further comprise a core material, which can be any material known in the art, examples being resilient glass fibre, para-aramid, PBO (Poly-p-phenylobenzobisthiazole (Zylon - trade mark)) or the like. The belt is preferably for use in automotive applications, particularly automobile engines or the like. The belt is preferably a synchronous or timing belt.

According to a further aspect of the present invention, there is provided a yarn comprising a core thread surrounded by a thread comprising a friction reducing substance.

The friction reducing substance preferably has a coefficient of friction of less than 0.5, as mentioned above, and is preferably PTFE.

As mentioned above, the core thread is preferably surrounded by an inner thread which is itself surrounded by an outer thread. The outer thread preferably comprises the friction reducing substance. In one embodiment, the inner thread is wound around the core in the opposite direction with respect to the outer thread. Preferably, the core thread is elastic.

According to a further aspect of the present invention, there is provided a method of forming the yarn, which method comprises winding one or more threads around the core thread. The winding process, in which the one or more surrounding threads are wound around the core thread, is described above.

In a further aspect of the present invention, there is provided a method of forming a fabric from the yarn, which comprises weaving the yarn to form the fabric.

The invention will now be described, by way of example only, with reference to the following drawings, and in which:
Figure 1 is a view of a typical first yam according to the present invention;
Figure 2 is a view of a typical second yam;
Figures 3A and 3B show a top view of fabrics according to the present invention;
Figure 4 shows a perspective view of a belt, partially in cross-section, according to the present invention;
Figure 5 is a graph showing amplitude of friction against time for each face of a sample; and
Figure 6 is a graph of temperature generated for a variety of fabric samples against time.

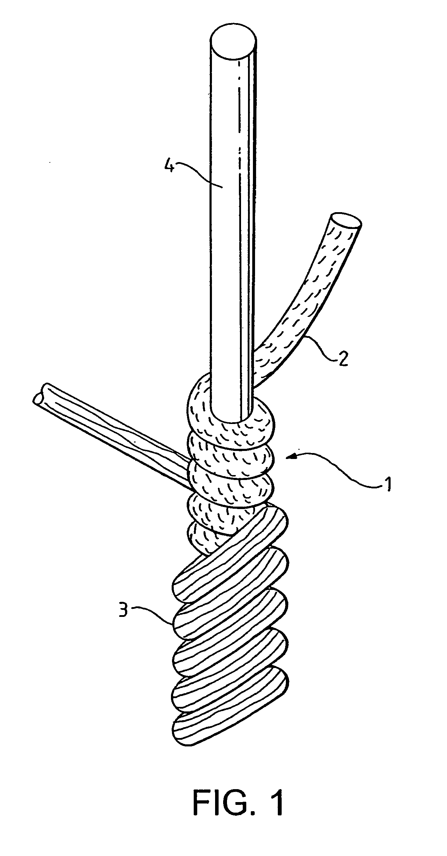

Figure 1 shows a first yam generally at 1 (yarn 'A') which is in accordance with the present invention. The yam 1 comprises an inner thread 2 and an outer thread 3, each of which are made from PTFE which has a low coefficient of friction. Threads 2 and 3 are wound around an elastic core thread 4 in opposite directions. Core thread 4 is formed of an elastic material. During the windings of threads 2 and 3 around core thread 4, the core thread 4 is extended in the final fabric construction.

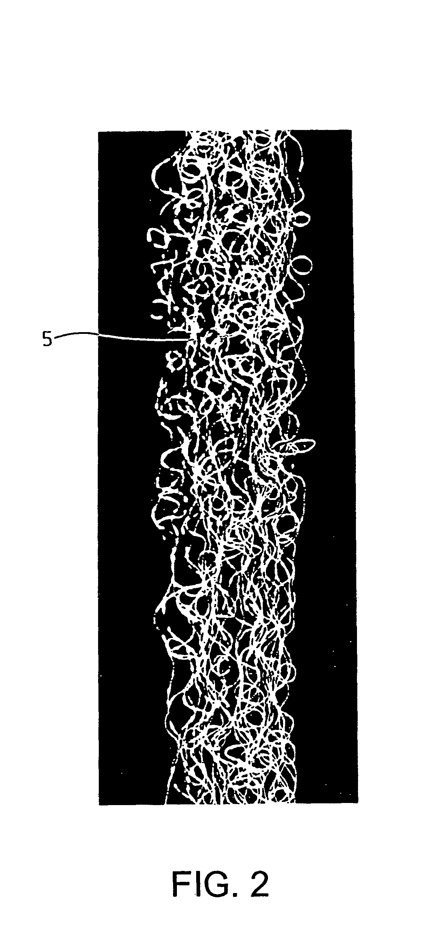

Figure 2 shows a thermoplastic yarn 5 (yarn 'B') which forms the second yarn, not comprising PTFE. It is formed of a thermoplastic material, for example Nylon 66.

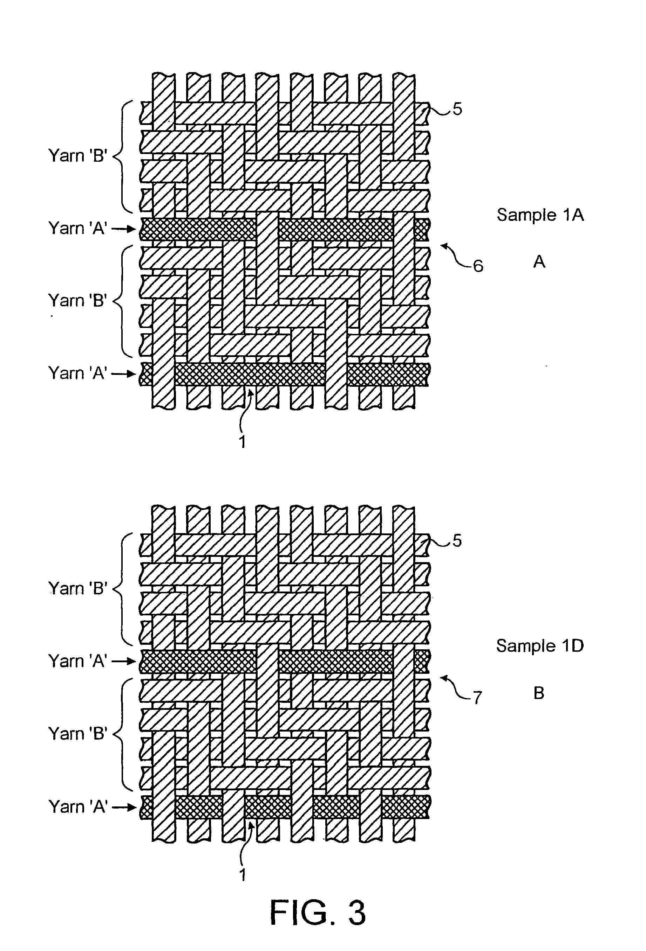

Figures 3A and 3B show fabrics 6 and 7 which are woven from yarns 1 and 5 in different ways, as shown.

The fabrics 6 and 7 are designed so that yarn 1 will predominantly be on one surface of the fabric (the surface which will contact a pulley when used in a synchronous belt). The proportion of yarn 1 in the fabric is dependent on the degree of reduction of the co-efficient of friction that will be required for each individual application. This will be inevitably different for different applications within the automotive and other industries. The reason that yam 1 should be predominantly on one surface of the fabric is that the low coefficient of friction that the yarn offers should be focused towards the pulley surface and that the said low co-efficient of friction yarn should not interfere with any applied adhesion system that is applied to the opposite surface (Cord surface) of a belt. Although the examples given have been designed with the low co-efficient of friction yarn in the weft direction, it is understood that a similar effect can also be obtained if it is used in the warp direction, or indeed in both directions.

It is preferable that the warp yam in the structure is a continuous filament type (Nylon for example). This will enable the weft yarns to pass over the warp yarns easily during the finishing process thus providing the necessary stretch in the fabric to enable it to follow the profile of timing belt teeth in a mould. An illustration of how the yarns are woven into a fabric can be seen in Figures 3A and 3B.

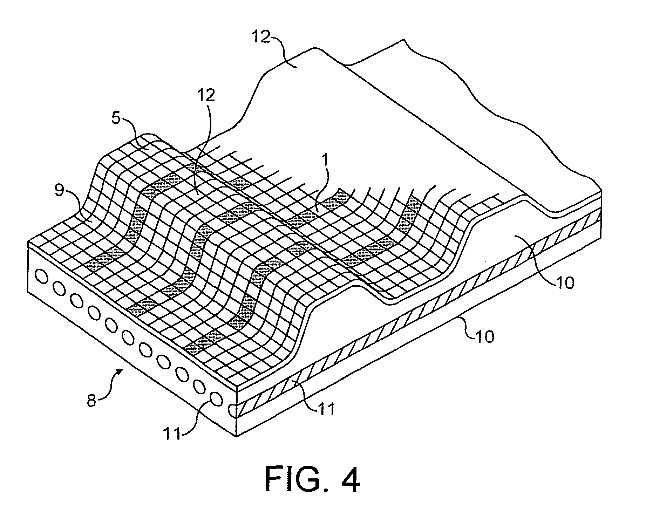

Figure 4 shows a synchronous belt generally at 8 comprising the fabric of the present invention. The belt 8 comprises an upper working surface 9 which has more of PTFE present than on the underside surface which is adhered to a rubber substrate 10. The fabric is formed from yarn 1 and yarn 5 as shown. Tension members 11 are formed within the substrate 10 and, in the embodiment shown are formed of a glass cord. The belt is shaped to include teeth 12 which may cooperate with a pulley or the like when in use in an engine or the like.

### Example

Five samples have been tested including a control. Sample 1A had 4 weft insertion of yarn 'B' (see Figure 2) and 1 weft insertion of yarn 'A' (see Figure 1). Sample 1 B had 8 weft insertions of Yarn 'B' then 1 weft insertion of yarn 'A'. Sample 1C had 16 weft insertions of Yarn 'B' then 1 weft insertion of yarn 'A'. In the above fabric yarns 'A' and 'B' were inserted into the fabric as per Figure 3A. Sample 1 D had 4 weft insertions of yarn 'B' and 1 weft insertion of yarn 'A' but inserted into the fabric in a different manner from the previous samples, Figure 3B. Sample 1 E is the control using yam 'B' only. All fabrics were treated with a RFL dip, the latex part being a non-carboxylated HNBR. RFL is a system for providing adhesion of textiles to other substrates such as rubbers. RF is resorcinol formaldehyde resin and a latex is added to that resin which is suitable or compatible for the particular rubber to be adhered to. HNBR refers to a hydrogenated nitrite where NBR is a synthetic rubber based on nitrile. The hydrogenation process enables the double bonds present in the NBR to react with hydrogen. This creates the saturation of the compound, thus retarding the effects of oxygen and ozone which cause degradation.

The fabric construction is as follows:
Warp yarn 235f34x1 HT PA66 Heat protected
Weft yarn 'A' 440 d'tex PTFE double covered on 480 elastane core
Weft yarn 'B' 78f34x6 HT PA66 Heat protected textured
Ends 81 per 25mm
Picks 70 per 25mm
Weight 550gms/m²

The introduction of PTFE enhances the abrasion resistance of the product a can be seen in the table below:

| T7177 - Sample | Initial tensile strength | Duration of abrasion | Tensile strength after abrasion | % Retained strength |
|---|---|---|---|---|
| | (N/25mm) | (Hrs) | (N/25mm) | (N/25mm) |
| A | 1760 | 500 | 1282 | 73 |
| B | 1790 | 500 | 1316 | 74 |
| C | 1891 | 500 | 869 | 46 |
| D | 1768 | 500 | 855 | 48 |
| E | 2017 | 30 | 1513 | 75 |

The test procedure for the above was as follows:
25mm abrasion samples prepared from 50% extended fabric
A standard HNBR compound 2mm thick
A Leno backing fabric

Abrasion test parameters:
Heathcoat mark I abrasion tester
Tool tips - 0.5mm Tungsten Carbide
Amplitude - 10mm
Frequency - 170 RPM
Initial tension -1400gms

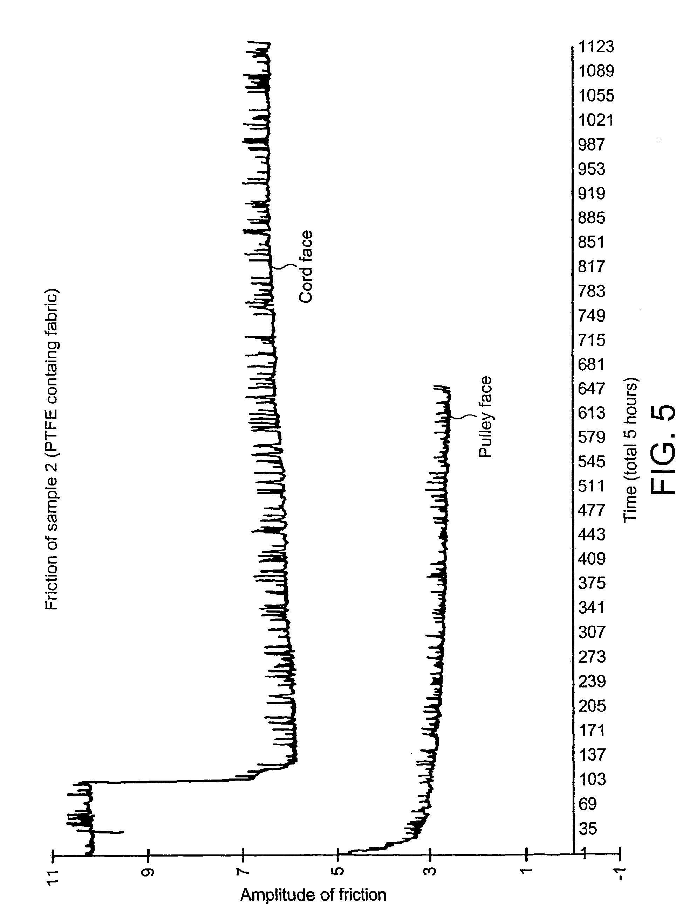

The introduction of PTFE in a fabric also reduces the co-efficient of friction on the fabric surface, the results of which can be seen in Figure 5. This test was carried out on fabric Sample 2 that has 4 weft insertions of yarn 'B' and 1 weft insertion of yarn 'A'. The fabric treatment is RFL but for this sample the latex component is Polychloroprene. This reduces the testing time significantly. In addition to the friction being measured, the retained tensile strength was tested, and the results are shown below:

| Sample 2 | Initial tensile strength (N/25mm) | Tensile strength after 3 hours abrasion (N/25mm) | % tensile strength retained |
|---|---|---|---|
| Tested on fabric face where PTFE is exposed | 1835 | 1195 | 65.1 |
| Tested on fabric face where PTFE is not exposed | 1850 | 998 | 53.9 |

Machine parameters:
Mark II Heathcoat abrasion machine
Tips - 0.5mm Tungsten carbide
Amplitude - 10mm
Frequency - 1750 Hz
Initial tension - 1400g
Test duration - 3 hours

The mark I abrasion machine is described in EP-A-0629848. The mark II machine works in the same way but has a more powerful motor.

From microscopic analysis, it can be seen that the PTFE yarn that is incorporated in the fabric is providing a lubrication effect. After abrasion on the mark I and mark II Heathcoat abrasion machines, the PTFE material has been transferred to adjacent false twist textured nylon yarns. It is reasonable to assume that this lubrication/smearing effect would also be transferred to the pulley surfaces within the timing belt system, thus reducing the co-efficient of friction of the timing belt, when entering and exiting the pulleys, further. This again leads to extended longevity of the timing belt.

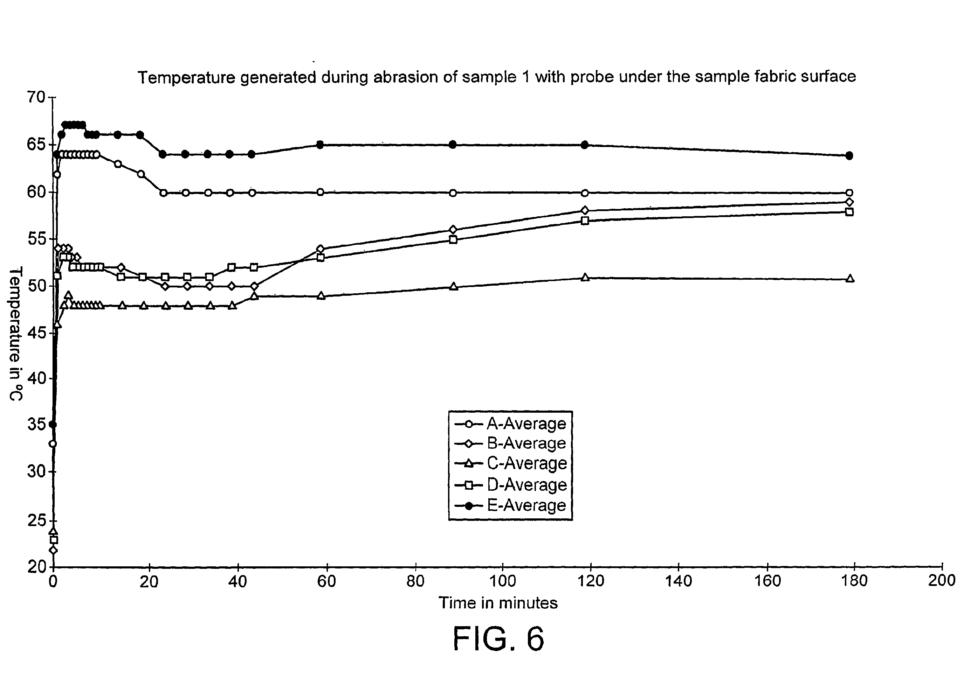

Figure 6 shows that the temperature generated during abrasion is higher for the control sample than for the sample of the invention.

The choice of PTFE yarn that is used is important. The strength should be at least 30 centi Newtons/tex (3.0 grammes per decitex). The profile or cross-section should be such that the PTFE can exhibit its best lubrication effect; this is best achieved by having a flat side on a predominantly round cross-section profile. Reference is made to GB-A-2308827.

## Claims

1. A fabric comprising:
(a) a first yarn which comprises a friction reducing substance; and
(b) a second yarn,
wherein more of the first yarn is present on one surface of the fabric than on the other surface of the fabric, and wherein the first yarn (1) comprises a core thread (4) surrounded by a thread (3) comprising the friction reducing substance.

2. A fabric according to claim 1, wherein the friction reducing substance has a coefficient of friction of less than 0.5.

3. A fabric according to claim 1 or 2, wherein the friction reducing substance is PTFE.

4. A fabric according to any preceding claim, wherein the first yarn is present in the weft direction of the fabric.

5. A fabric according to any preceding claim, wherein the core thread is surrounded by an inner thread (2) which is itself surrounded by an outer thread (3).

6. A fabric according to claim 5, wherein the outer thread comprises the friction reducing substance.

7. A fabric according to claim 5 or 6, wherein the inner thread is wound around the core in the opposite direction with respect to the outer thread.

8. A fabric according to any preceding claim, wherein the core thread is , elastic.

9. A fabric according to any preceding claim, wherein the second yarn comprises a thermoplastic material.

10. A fabric according to any preceding claim, wherein the second yarn is capable of stretching by at least 80% in the fabric.

11. A fabric according to any preceding claim, wherein the second yam retains at least 80% of its tensile strength after exposure to heat at 140°C for 14 days.

12. A fabric according to any preceding claim, wherein the strength of the first yarn is at least 30 centi Newtons/tex (3.0g/decitex).

13. A fabric according to any preceding claim, wherein the first yarn comprises a flattened outer surface.

14. A belt comprising the fabric according to any preceding claim, wherein the surface of the fabric comprising more of the first yarn is an outer working surface of the belt.

15. A belt according to claim 14, further comprising a substrate, wherein the other surface of the fabric is adhered or otherwise attached to the substrate.

16. A belt according to claim 14 or 15, wherein the outer working surface comprises protrusions.

17. A belt according to claim 15, wherein the substrate comprises a filler material.

18. A belt according to any one of claims 14 to 17, further comprising a core material.

## Patentansprüche

1. Gewebe, das Folgendes umfasst:
(a) ein erstes Garn, das eine reibungsmindernde Substanz umfasst, und
(b) ein zweites Garn,
wobei auf der einen Oberfläche des Gewebes mehr von dem ersten Garn vorhanden ist als auf der anderen Oberfläche des Gewebes und das erste Garn (1) einen Kernfaden (4) umfasst, der von einem Faden (3) umgeben ist, der die reibungsmindernde Substanz umfasst.

2. Gewebe nach Anspruch 1, bei dem die reibungsmindernde Substanz einen Reibungskoeffizienten von weniger als 0,5 aufweist.

3. Gewebe nach Anspruch 1 oder 2, bei dem es sich bei der reibungsmindernden Substanz um PTFE handelt.

4. Gewebe nach einem der vorhergehenden Ansprüche, bei dem sich das erste Garn in der Schussrichtung des Gewebes befindet.

5. Gewebe nach einem der vorhergehenden Ansprüche, bei dem der Kernfaden von einem inneren Faden (2) umgeben ist, der wiederum von einem äußeren Faden (3) umgeben ist.

6. Gewebe nach Anspruch 5, bei dem der äußere Faden die reibungsmindernde Substanz umfasst.

7. Gewebe nach Anspruch 5 oder 6, bei dem der innere Faden in Bezug zu dem äußeren Faden in entgegengesetzter Richtung um den Kern gewickelt ist.

8. Gewebe nach einem der vorhergehenden Ansprüche, bei dem der Kernfaden elastisch ist.

9. Gewebe nach einem der vorhergehenden Ansprüche, bei dem das zweite Garn ein thermoplastisches Material umfasst.

10. Gewebe nach einem der vorhergehenden Ansprüche, bei dem sich das zweite Garn in dem Gewebe um mindestens 80% dehnen lässt.

11. Gewebe nach einem der vorhergehenden Ansprüche, bei dem das zweite Garn, wenn es 14 Tage lang einer Temperatur von 140°C ausgesetzt worden ist, mindestens 80% seiner Zugfestigkeit beibehält.

12. Gewebe nach einem der vorhergehenden Ansprüche, bei dem die Festigkeit des ersten Garns mindestens 30 Zentinewton/tex (3,0 g/Dezitex) beträgt.

13. Gewebe nach einem der vorhergehenden Ansprüche, bei dem das erste Garn eine flachgedrückte Außenfläche umfasst.

14. Riemen, der das Gewebe nach einem der vorhergehenden Ansprüche umfasst und bei dem die Oberfläche des Gewebes, die mehr von dem ersten Garn umfasst, eine äußere Lauffläche des Riemens ist.

15. Riemen nach Anspruch 14, der des Weiteren ein Substrat umfasst und bei dem die andere Oberfläche des Gewebes an das Substrat geklebt oder anderweitig daran befestigt ist.

16. Riemen nach Anspruch 14 oder 15, bei dem die äußere Lauffläche Vorsprünge umfasst.

17. Riemen nach Anspruch 15, bei dem das Substrat ein Füllmaterial umfasst.

18. Riemen nach einem der Ansprüche 14 bis 17, der des Weiteren ein Kernmaterial umfasst.

## Revendications

1. Tissu comprenant :
(a) un premier fil qui comprend une substance de réduction du frottement ; et
(b) un deuxième fil,
dans lequel plus du premier fil est présent sur une surface du tissu que sur l'autre surface du tissu, et
dans lequel le premier fil (1) comprend un fil central (4) entouré d'un fil (3) comprenant la substance de réduction du frottement.

2. Tissu selon la revendication 1, dans lequel la substance de réduction du frottement a un coefficient de friction inférieur à 0,5.

3. Tissu selon la revendication 1 ou 2, dans lequel la substance de réduction du frottement est le PTFE.

4. Tissu selon l'une quelconque des revendications précédentes, dans lequel le premier fil est présent dans la direction de la trame du tissu.

5. Tissu selon l'une quelconque des revendications précédentes, dans lequel le fil central est entouré d'un fil intérieur (2) qui est lui-même entouré d'un fil extérieur (3).

6. Tissu selon la revendication 5, dans lequel le fil extérieur comprend la substance de réduction du frottement.

7. Tissu selon la revendication 5 ou 6, dans lequel le fil intérieur est enroulé autour du fil central dans la direction opposée à celle du fil extérieur.

8. Tissu selon l'une quelconque des revendications précédentes, dans lequel le fil central est élastique.

9. Tissu selon l'une quelconque des revendications précédentes, dans lequel le deuxième fil comprend un matériau thermoplastique.

10. Tissu selon l'une quelconque des revendications précédentes, dans lequel le deuxième fil est capable de s'étirer d'au moins 80% dans le tissu.

11. Tissu selon l'une quelconque des revendications précédentes, dans lequel le deuxième fil conserve au moins 80% de sa résistance à la traction après une exposition à la chaleur à 140°C pendant 14 jours.

12. Tissu selon l'une quelconque des revendications précédentes, dans lequel la résistance du premier fil est d'au moins 30 centinewtons/tex (3,0 g/décitex).

13. Tissu selon l'une quelconque des revendications précédentes, dans lequel le premier fil comprend une surface extérieure aplatie.

14. Courroie constituée du tissu selon l'une quelconque des revendications précédentes, dans laquelle la surface du tissu comprenant plus du premier fil est une surface de travail extérieure de la courroie.

15. Courroie selon la revendication 14, comprenant en outre un substrat, dans laquelle l'autre surface du tissu est collée ou fixée autrement au substrat.

16. Courroie selon la revendication 14 ou 15, dans laquelle la surface de travail extérieure comprend des saillies.

17. Courroie selon la revendication 15, dans laquelle le substrat comprend un matériau de charge.

18. Courroie selon l'une quelconque des revendications 14 à 17, comprenant en outre un matériau noyau.
